# EUROPÄISCHE PATENTSCHRIFT

(11) **EP 0 794 077 B1**
(45) Veröffentlichungstag und Bekanntmachung des Hinweises auf die Patenterteilung: **16.02.2000**
(21) Anmeldenummer: 97103581.1
(22) Anmeldetag: 05.03.1997
(51) Int. Cl.: B60J 7/047

(54) **Fahrzeugdach mit einer Folge von ausstellbaren Deckelelementen**
Vehicle roof with a range of tiltable plate elements
Toit de voiture avec une séquence de lamelles escamotables

(30) Priorität: 07.03.1996 DE 19608916
(43) Veröffentlichungstag der Anmeldung: 10.09.1997
(73) Patentinhaber: WEBASTO KAROSSERIESYSTEME GmbH, D-82131 Stockdorf (DE)
(72) Erfinder: Reihl, Peter, 82319 Starnberg (DE); Färber, Manfred, 82407 Wielenbach (DE); Kronseder, Robert, 84432 Hohenpolding (DE)
(74) Vertreter: Wiese, Gerhard

(56) Entgegenhaltungen:
- EP-A- 0 309 775
- DE-C- 4 329 580
- GB-A- 2 113 623

## Beschreibung

Die Erfindung bezieht sich auf ein Fahrzeugdach mit einer Folge von mindestens zwei Deckelelementen zum wahlweisen Verschließen oder mindestens teilweisen Freigeben einer Dachöffnung in einer Dachfläche, wobei die Deckelelemente in der Schließstellung aneinander angrenzen und einen flächigen Verbund bilden, jedes Deckelement an seinen Schmalseiten jeweils mit einem schwenkbaren Befestigungselement verbunden ist und die Befestigungselemente entlang einer dachfesten Führungsbahn geführt sind, und wobei jeweils zwei benachbarte Befestigungselemente für eine gemeinsame Bewegung in Öffnungs- und Schließrichtung gekuppelt sind, solange sie nicht voll ausgeschwenkt sind, und entkuppelt sind, sobald eines der beiden Befestigungselemente seine voll ausgeschwenkte Stellung erreicht hat, und derart miteinander in Eingriff stehen, daß sie in entkuppeltem Zustand unter Ausschwenkung des noch nicht voll ausgeschwenkten Befestigungselements gegeneinander verstellbar sind, ein Befestigungselement in der voll ausgeschwenkten Lage unter dem Einfluß der Öffnungsbewegung des einen benachbarten Befestigungselements jeweils über ein Verriegelungsselement fest mit der dachfesten Führungsbahn verriegelbar ist, und die Verriegelung eines voll ausgeschwenkten Befestigungselements mit der dachfesten Führungsbahn unter dem Einfluß der Schließbewegung des einen benachbarten Befestigungselements selbsttätig lösbar ist.

Ein bekanntes Fahrzeugdach dieser Art (DE-PS-44 07 286) ist als Lamellendach ausgebildet und ermöglicht im Gegensatz zu Schiebe- bzw. Schiebehebedächern das Freilegen relativ großer Dachöffnungen bei gleichzeitiger hoher Stabilität, sicherer Halterung der Lamellen und aerodynamisch günstigem Verhalten. Eine Anpassung an unterschiedliche Fahrzeugtypen ist bereits relativ einfach zu erzielen. Bei dem aus DE-PS-44 07 286 bekannten Lamellendach wird die dachfeste Verriegelung eines voll ausgeschwenkten Befestigungselements durch eine Anordnung mit einem Riegelstein in einer Lagereinheit gebildet, welche jeweils zwei benachbarte Befestigungselemente verbindet. Unter dem Einfluß der Bewegung des dem voll ausgeschwenkten Befestigungselement vorausgehenden Befestigungselements übt ein Riegelsteinschieber über Schrägflächen eine Querkraft auf den Riegelstein der diese beiden Befestigungselemente verbindenden Lagereinheit senkrecht zu der Öffnungsrichtung des Fahrzeugdaches aus, so daß der Riegelstein senkrecht zur Öffnungsrichtung in eine Riegelsteinaufnahme in einer dachfesten Führungsschiene geschoben wird, wodurch er eine dachfeste Verriegelung der Lagereinheit und damit des voll ausgeschwenkten Befestigungselements bewirkt. Beim Schließen des Daches übt die Bewegung des dem voll ausgeschenkten Befestigungselement vorhergehenden Befestigungselements über Schrägflächen an dem Riegelstein und der dachfesten Riegelsteinaufnahme eine Querkraft auf den Riegelstein auf, so daß sich dieser aus der dachfesten Riegelsteinaufnahme heraus wieder in die Riegelsteinaufnahme in dem Riegelsteinschieber hineinbewegt und die dachfeste Verriegelung der Lagereinheit (und damit der voll ausgeschwenkten Lamelle) aufhebt.

Bei diesem bekannten Verriegelungsmechanismus für ein Lamellendach erwies es sich als nachteilig, daß die Montage relativ aufwendig ist und die Art des Verriegelungsmechanismus in der Praxis eine filigrane Ausbildung der beteiligten Bauteile, insbesondere der Schieber und der Riegelsteine erfordert, so daß auch die jeweiligen Anlageflächen zur Kraftübertragung entsprechend klein dimensioniert sind. Dadurch ist eine zuverlässige Funktion dieses bekannten Verriegelungsmechanismus in der Praxis, speziell in der Serienfertigung, nicht immer ausreichend gewährleistet. Insbesondere besteht die Gefahr, daß sich Riegelsteine verkanten.

In der Stand der Technik gemäß §3, Abs. 2 PatG bildenden deutschen Patentanmeldung Nr. 195 29 522 ist ein Verriegelungsmechanismus mit einem schwenkbaren Riegelstein beschrieben, welcher benachbarte Befestigungselemente unter dem unmittelbaren Einfluß der Öffnungsbewegung des diesen beiden Befestigungselementen vorhergehenden Befestigungselements, d.h. ohne Verwendung eines Riegelsteinschiebers, fest miteinander verriegelt bzw. unter Einfluß der entsprechenden Schließbewegung wieder entriegelt. Nachteilig bei diesem Verriegelungsmechanismus ist, daß beispielsweise bei einem Unfall die gesamte Beschleunigung des Lamellenpaketes von nur einem (bzw. zwei) Riegelsteine(n) aufgefangen werden muß, was zu einem Versagen der Verriegelung führen kann.

Es ist Aufgabe der vorliegenden Erfindung, ein Lamellendach zu schaffen, das eine einfache und kostengünstige Montage ermöglicht und einen selbsttätig lösbaren Verriegelungsmechanismus aufweist, der ein zuverlässiges und sicheres Öffnen und Schließen des Lamellendaches jederzeit gewährleistet, sowie auch im Falle eines Unfalls für eine sichere Verriegelung sorgt.

Diese Aufgabe wird ausgehend von einem Fahrzeugdach der eingangs genannten Art dadurch gelöst, daß das Verriegelungselement jeweils gegenüber dem Befestigungselement schwenkbar ist.

Die Schwenklagerung der Verriegelungselemente bewirkt eine wesentlich erhöhte Zuverlässigkeit der Verriegelungs- bzw. Entriegelungsbewegung, insbesondere eine im Vergleich zu Verschiebebewegungen verringerte Verkantungsgefahr sowie einen verringerten Bewegungswiderstand. Vor allem ist auch keine Verschiebung des Verriegelungselements quer zur Öffnungs- bzw. Schließrichtung nötig. Die Anlageflächen können problemlos ausreichend groß dimensioniert werden. Ferner kann der Kraftaufwand zur Betätigung des Verriegelungsmechanismus verringert werden.

Vorzugsweise ist das jeweils einem Befestigungselement zugeordnete Verriegelungselement unmittelbar von dem einen der beiden benachbarten Befestigungselemente betätigbar. Die damit verbundene Einsparung von Bauteilen bringt einerseits einen allgemeinen Kostenvorteil mit sich und erleichtert andererseits die Montage. Ferner reduziert die unmittelbare Betätigung des Verriegelungselements die Wahrscheinlichkeit des Auftretens von Funktionsfehlern und erleichtert zudem die Funktionskontrolle. Außerdem erlaubt ein solchermaßen vereinfachter Verriegelungsmechanismus eine größere Flexibilität bei der Ausbildung der Bauteile, insbesondere deren größere Dimensionierung. Insgesamt wird die Zuverlässigkeit des Verriegelungsmechanismus stark erhöht.

In weiterer bevorzugter Ausgestaltung der Erfindung ist das Verriegelungselement als Riegelwippe ausgebildet ist, die in ihrem Mittelabschnitt schwenkbar gelagert ist sowie an ihrem einen Endabschnitt ein Riegelteil und an ihrem anderen Endabschnitt einen Betätigungsarm aufweist. Dies ermöglicht mittels des Hebelprinzips eine geeignete Kraftumsetzung.

Vorzugsweise liegt das Riegelteil der Riegelwippe so nahe bei der Schwenkachse der Schwenkbewegung des Befestigungselements bezüglich der Führungsschiene, daß das Ausschwenken des Befestigungselements keine wesentliche Höhenbewegung des Riegelteils bezüglich der Führungsschiene bewirkt. Dies erlaubt eine einfache Ausbildung der Verriegelungsmechanik.

Ferner ist bevorzugt, daß benachbarte Befestigungselemente dadurch seitlich geführt miteinander verstellbar verbunden sind, daß der Schuh des hinteren Befestigungselements von einer Seite in den Kulissenschlitz des vorderen Befestigungselements eingreift, während ein an dem hinteren Befestigungselement ausgebildeter Gegenhalter als entgegengesetzte Anlagefläche vorgesehen ist. Dies Ausbildung gewährleistet eine stabile Verbindung benachbarter Befestigungselemente quer zur Öffnungsrichtung.

Weitere bevorzugte Ausbildungen der Erfindung ergeben sich aus den Unteransprüchen.
- FIG. 1: eine perspektivische schematische Ansicht eines Lamellendaches im teilweise geöffneten Zustand;
- FIG. 2: eine Ansicht entsprechend FIG. 1 bei voll geöffnetem Dach;
- FIG. 3: eine perspektivische schematische Ansicht der in Fahrtrichtung linken Seite von drei Lamellen eines Lamellendaches entsprechend FIG. 2 in geöffnetem Zustand;
- FIGN. 4a und 4b: nebeneinandergelegt sowie FIG. 5, 6 und 7 jeweils eine Seitenansicht der in Fahrtrichtung linken Seite eines Lamellendaches aus vier Lamellen in unterschiedlichen Öffnungszuständen;
- FIG. 8: das Lamellendach wie in FIG. 4 bis 7, jedoch in vollständig geöffnetem Zustand;
- FIG. 9a bis 9c: verschiedene Ansichten einer erfindungsgemäßen Riegelwippe; und
- FIG. 10: eine Aufsicht auf ein erfindungsgemäßes, in Fahrtrichtung links liegendes Befestigungselement einer Lamelle.

Richtungen werden im weiteren wie folgt bezeichnet: "vorn" bzw. "vorhergehend" bedeutet in Richtung von der als ersten voll ausgeschwenkten Lamelle weg, "hinten" bzw. "nachfolgend" bedeutet in Richtung zu der als ersten voll ausgeschwenkten Lamelle hin, "innen" bedeutet quer zur Fahrtrichtung zur Dachöffnung hin, "außen" quer zur Fahrtrichtung von der Dachöffnung weg, "oben" bedeutet von Fahrzeugboden weg, "unten" zum Fahrzeugboden hin.

Bei der veranschaulichten Ausführungsform bedeutet insbesondere "vorn" bzw. "vorhergehend" in normaler Fahrtrichtung, und "hinten" bzw. "nachfolgend" bedeutet entgegen der normalen Fahrtrichtung.

Der Begriff "Lamelle" soll nicht einschränkend bezüglich der geometrischen Form, insbesondere hinsichtlich des Verhältnisses von Länge zu Breite, verstanden werden. Es kann sich dabei auch um Deckelelemente handeln, die beispielsweise etwa so lang wie breit sind.

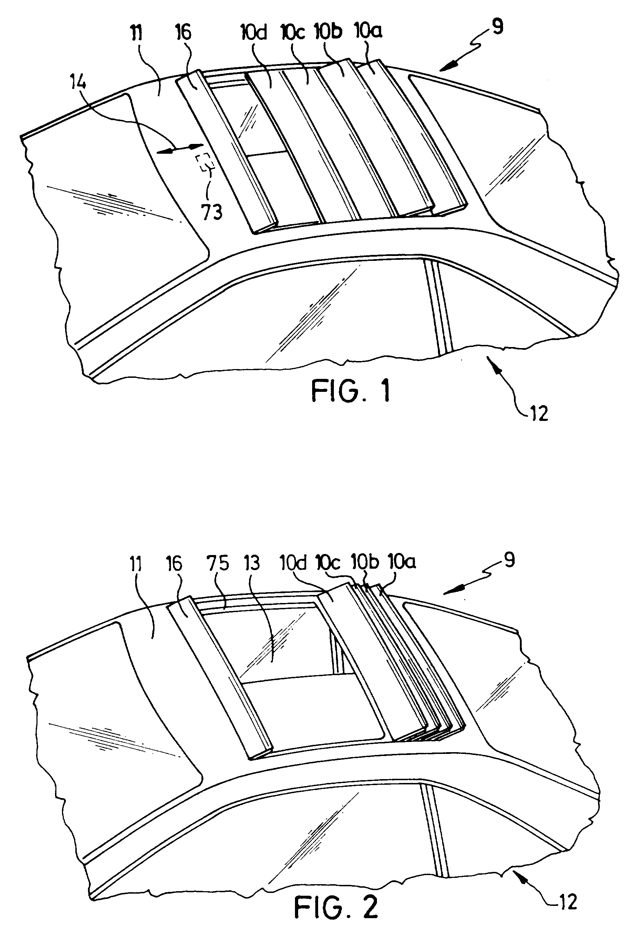

Das vorliegend erläuterte, als Lamellendach zu bezeichnende Fahrzeugdach 9 weist, wie aus den Prinzipdarstellungen der FIGn. 1 und 2 hervorgeht, eine Folge von Schiebelamellen 10a bis 10d auf. Diese Lamellen dienen dem wahlweisen Verschließen oder mindestens teilweisen Freigeben einer Dachöffnung 13, die in einer festen Dachfläche 11 eines Kraftfahrzeuges 12 ausgebildet ist. Zum Öffnen und Verschließen des Daches 9 lassen sich die Lamellen 10a bis 10d verschieben, wobei im gezeigten Ausführungsbeispiel die mit dem Doppelpfeil 14 angedeutete Verschieberichtung parallel zur Fahrzeuglängsachse verläuft. Grundsätzlich sind aber auch andere Verschieberichtungen, z.B. quer zur Fahrzeuglängsachse, möglich. In ihrer Schließstellung stoßen die Lamellen 10a bis 10d mit ihren quer zur Verschieberichtung 14 verlaufenden Längskanten beziehungsweise dort angeordneten Dichtelementen dichtend aneinander an. Dabei bilden sie einen flächigen Lamellenverbund, wie dies in Fig. 1 für die beiden Lamellen 10d und 10c angedeutet ist. Die Lamellen 10a bis 10d können ferner jeweils um eine sich quer zur Verschieberichtung 14 erstreckende (virtuelle) Schwenkachse verschwenkt werden, die im veranschaulichten Ausführungsbeispiel näherungsweise in Höhe der festen Dachfläche 11 liegt.

Eine nachstehend näher erläuterte Verstellmechanik koordiniert die Verschiebe- und Schwenkbewegungen der einzelnen Lamellen 10a bis 10d derart, daß beim Verstellen der Schiebelamellen der flächige Lamellenverbund eine Translationsbewegung in der Verschieberichtung 14 ausführt und dieser Verbund beim Öffnen des Daches 9 im Bereich des vorderen und/oder des hinteren Verbundendes durch Herausbewegen jeweils einer Lamelle aus dem Verbund Lamelle für Lamelle aufgelöst bzw. beim Schießen des Daches wiederhergestellt wird. Im Verlauf des Öffnens des zuvor geschlossenen Daches 9 wird dabei zunächst die Lamelle 10a so verschwenkt, daß sie mit ihrem hinteren Rand vom hinteren Rand der Dachöffnung 13 freikommt. Anschließend kann auf den Lamellenverbund eine Verstellkraft nach hinten ausgeübt werden.

Insbesondere kann die Lamelle 10a dann beginnend in der zuvor geschilderten Schräglage zusammen mit den übrigen, im flächigen Lamellenverbund verbleibenden, d.h. nicht ausgeschwenkten, Lamellen 10b bis 10d nach hinten verschoben werden. Dabei wird die Lamelle 10a kontinuierlich in ihre Endlage weiter verschwenkt. Nachdem die Lamelle 10a ihre in den FIGn. 1 und 2 veranschaulichte hintere Endstellung erreicht hat, wird die nächste Lamelle 10b ausgestellt. Dieses Spiel wiederholt sich, bis entsprechend FIG. 2 alle Schiebelamellen 10a bis 10c ausgestellt und nach hinten in ihre Offenstellung geschoben sind. Beim Schließen des Daches 9 wird ausgehend von der Offenstellung gemäß Fig. 2 zunächst nur die Lamelle 10d vorbewegt und in eine zur festen Dachfläche 11 parallele Lage zurückverschwenkt. Ein entsprechender Bewegungsablauf wird nacheinander für die folgenden Lamellen 10c, 10b und 10a erzwungen, bis die Lamellen in flächigem Verbund in ihrer vorderen Endstellung stehen und die Dachöffnung 13 verschließen.

Im Falle der veranschaulichten Ausführungsform sitzt im Bereich des vorderen Endes der Dachöffnung 13 ein ausstellbarer, lamellenförmiger Windabweiser 16, der beim Einleiten des Öffnungsvorganges um eine quer zur Fahrzeuglängsachse verlaufende Schwenkachse in eine schräg nach hinten ansteigende Lage verschwenkt wird. Dabei nimmt das Dach eine Lüftungsstellung ein, die bei in Schließstellung befindlichen Lamellen auch bei Regen benutzt werden kann. Der Windabweiser 16 legt sich in der Schließstellung des Daches 9 mit seiner Hinterkante gegen die Vorderkante der in der vorderen Endstellung stehenden Schiebelamelle 10d dichtend an. Er verschließt dabei den vordersten Teil der Dachöffnung 13. Gegebenenfalls kann die Auslegung aber auch so getroffen sein, daß der flächige Verbund der Lamellen 10a bis 10d in der Schließstellung von der Vorderkante bis zur Hinterkante der Dachöffnung 13 reicht und damit allein die Schließfunktion übernimmt. Dabei kann gegebenenfalls in für Schiebedächer an sich bekannter Weise ein Windabweiser vorgesehen sein, der bei geschlossenem Dach unter der festen Dachfläche verschwindet und der selbsttätig in eine Arbeitsstellung übergeht, wenn das Dach geöffnet wird. In den FIGn. 1 und 2 ist ein Fahrzeugdach mit vier Schiebelamellen 10a bis 10d dargestellt. Es versteht sich jedoch, daß die Anzahl der Schiebelamellen grundsätzlich beliebig in Abhängigkeit von den jeweiligen Gegebenheiten gewählt werden kann. Die gesamte Dachöffnung 13 kann beispielsweise durch nur zwei Lamellen bzw. Deckelelemente abgedeckt sein.

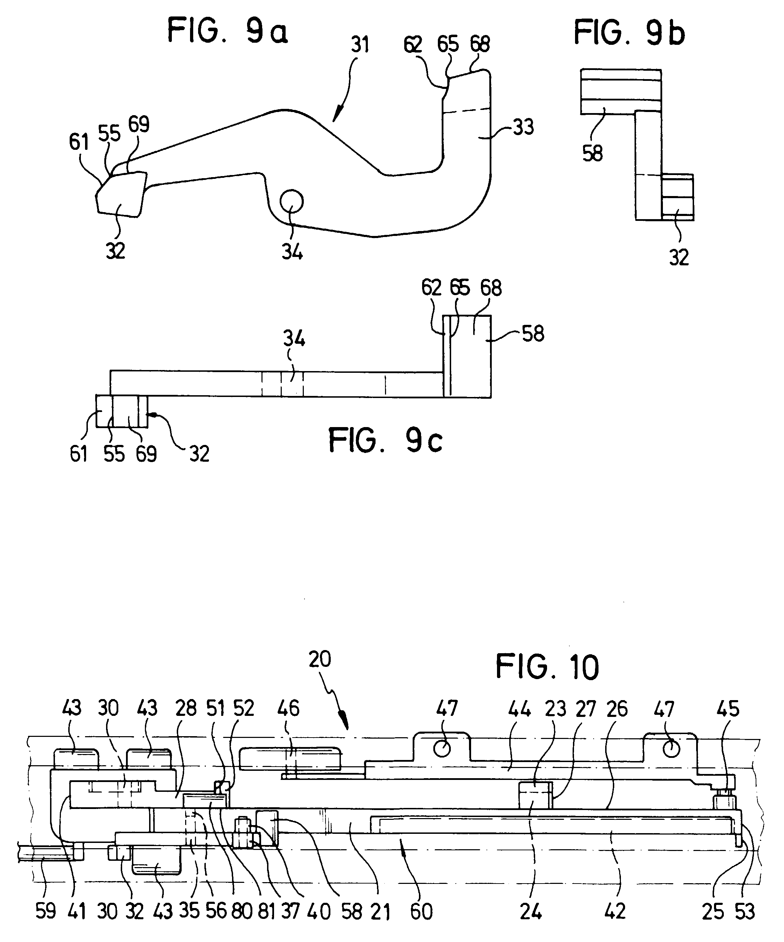

Jede Lamelle 10a bis d ist an ihren beiden Schmalseiten mit je einem Befestigungs-element 20a bis 20d verbunden. Ein Befestigungselement 20 setzt sich aus einem außen liegenden Verstellelement 60 und einem innen liegenden Trägerelement 44 zusammen (siehe insbesondere FIG. 10). Die Verstellelemente 60 weisen jeweils einen hinteren Teil 21 und einen vorderen Teil 28 auf.

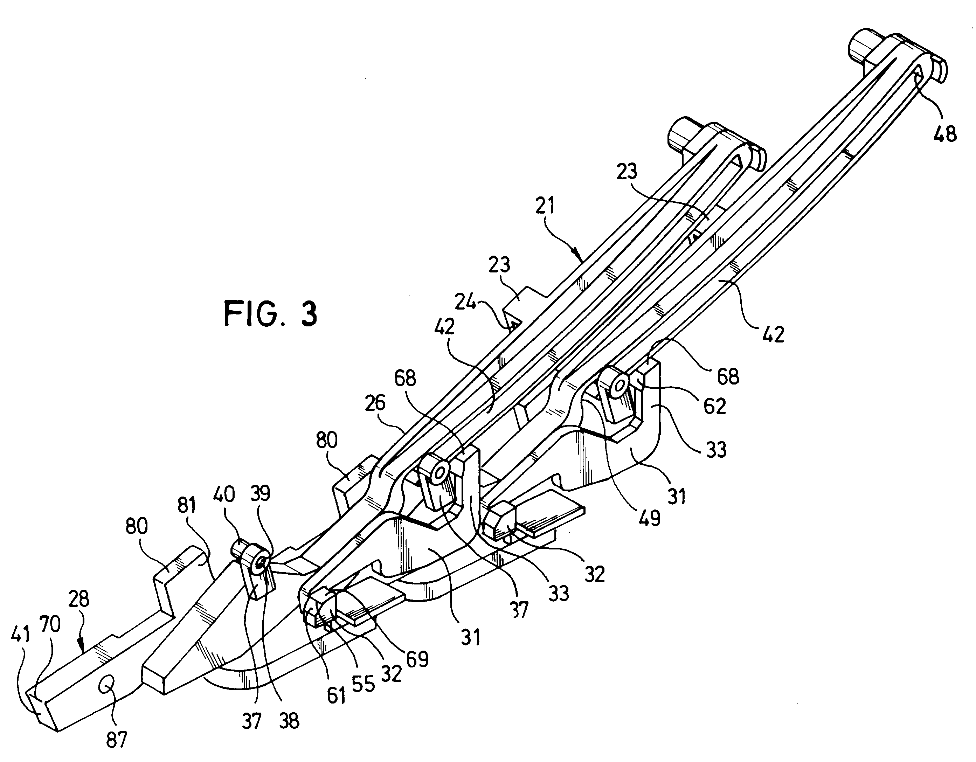

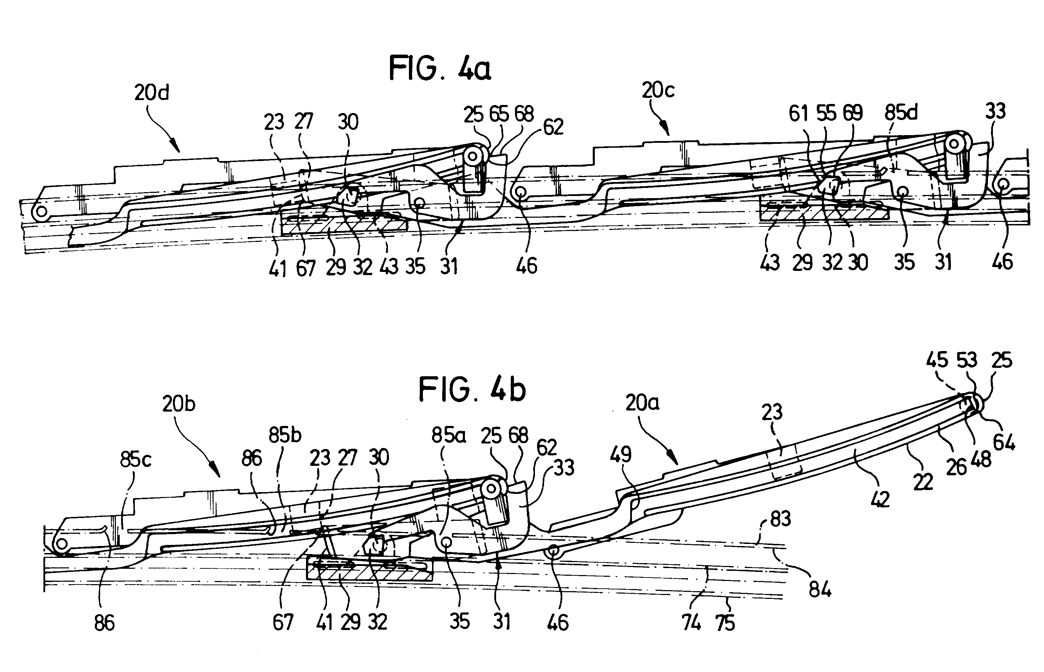

Am hinteren Ende 53 des hinteren Teils 21 ist ein gekrümmte, nach hinten weisende Anlagefläche 25 ausgebildet, die nach unten von einer Kante 64 begrenzt wird (FIG.4b). Die Unterseite 22 des hinteren Teils 21 wird von einer in Verschieberichtung 14 leicht gekrümmten Fläche gebildet. Im hinteren Bereich der Außenseite des hinteren Teils 21 des Verstellelements 60 ist ein geschwungener Kulissenschlitz 42 ausgebildet, dessen Krümmung in etwa zu der Krümmung der Unterseite 22 parallel läuft und dessen vorderes Ende mit 49 sowie dessen hinteres Ende mit 48 bezeichnet sind (FIG.3 und 4). Die Innenseite des hinteren Teils 21 ist mit 26 bezeichnet (FIG.3 und 10).

Das Verstellelement 60 und das mit Befestigungsöffnungen 47 zum Befestigen einer Lamelle 10 versehene Trägerelement 44 sind über einen Schwenkbolzen 45 schwenkbar miteinander verbunden. Der Schwenkbolzen 45 sitzt nahe dem hinteren Ende 53 des Verstellelements 60, und er bestimmt eine quer zur Verschieberichtung 14 orientierte Schwenkachse Das Trägerelement 44 weist an seinem vorderen Abschnitt einen Führungsstift 46 auf, der in eine Führungsbahn 74 einer parallel zur Verschieberichtung 14 dachfest angeordneten Führungsschiene 75 eingreift und entlang dieser Führungsbahn 74 verschiebbar geführt ist. Etwa in der Mitte des hinteren Teils 21 des Verstellelements 60 ist innen seitlich ein Mitnehmer 23 mit einer nach hinten weisenden, von einer Unterkante 67 begrenzten Anlagefläche 27 ausgebildet, die leicht nach vom geschwungen ist. Der Mitnehmer 23 weist von unten eine Ausnehmung 24 auf.

Weiter vorn ist außen seitlich an dem Verstellelement 60 ein sich nach oben erstreckender Arm 37 mit einer Bohrung 38 ausgebildet. Ein in diese Bohrung 38 eingesteckter Stift 39 trägt einen Schuh 40 (FIG.3). Der Schuh 40 ist an der Innenseite des Arms 37 um eine quer zu Verschieberichtung 14 orientierte Achse schwenkbar mit dem Arm 37 verbunden. Der Schuh 40 steht mit dem Kulissenschlitz 42 des vorangehenden Befestigungselements 20 derart in Eingriff, daß er entlang des Kulissenschlitzes 42 verschiebbar ist.

Das Vorderende des vorderen Teils 28 wird von einer vorderen Stirnfläche 41 gebildet, deren Oberkante mit 70 bezeichnet ist. In eine Bohrung 87 im vorderen Abschnitt des vorderen Teils 28 ist ein Schwenkbolzen 30 eingesetzt, über welchen ein Schlitten 29 mit dem vorderen Teil 28 schwenkbar verbunden ist. Der Schlitten 29 ist über an beiden Seiten ausgebildete kunststoffumspritzte Zapfen 43 gleitend in Führungsbahnen der dachfesten Führungsschiene 75 geführt. Im hinteren Abschnitt des vorderen Teils 28 ist am äußeren Rand ein sich nach oben erstreckender Gegenhalter 80 ausgebildet, der eine nach außen weisende Anlagefläche 81 aufweist. Der hintere Teil 21 des vorhergehenden Verstellelements 60, das durch den Eingriff des Schuhs 40 in den Kulissenschlitz 42 mit dem nachfolgenden Befestigungselement verbunden ist, wird seitlich nach innen durch Anlage der Innenfläche 26 des hinteren Teils 21 des Verstellelements 60 an der Anlagefläche 81 des Gegenhalters 80 und seitlich nach außen durch Anlage an dem Schuh 40 bzw. dem Arm 37 geführt, so daß kein Verkanten erfolgen kann. Die hintere Stirnfläche 51 des vorderen Teils 28 ist mit einem Puffer 52 (FIG. 10) aus elastischem Material, wie beispielsweise Gummi, versehen.

Der vordere Teil 28 ist gegenüber dem hinteren Teil 21 des Verstellelements 60 nach innen parallel versetzt. Die Innenfläche des nach innen weisenden Mitnehmers 23 ist in etwa bündig mit der Innenfläche des vorderen Teils 28. Die Ausnehmung 24 an dem Mitnehmer 23 ist so bemessen, daß sich der Gegenhalter 80 des nachfolgenden Verstellelements 60 ohne Verkantungsgefahr durch diese in Öffnungsrichtung hindurch bewegen kann.

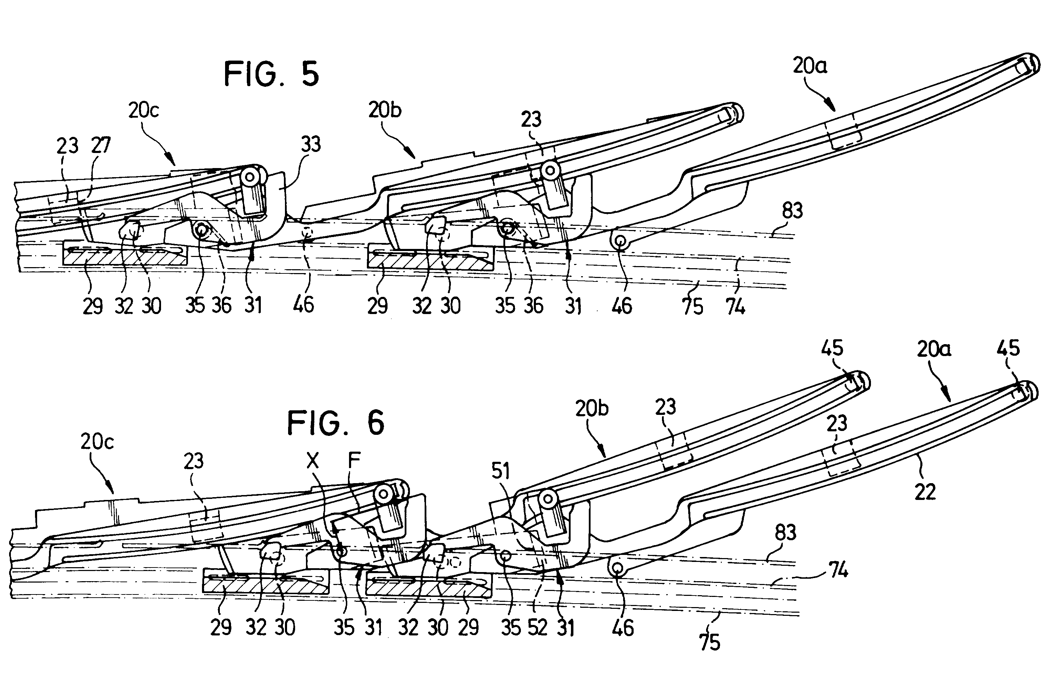

Im Bereich des vorderen Abschnitts des hinteren Teils 21 ist an dessen Außenseite ein als Riegelwippe 31 ausgebildetes Verriegelungselement schwenkbar gelagert. Der hintere Abschnitt der Riegelwippe 31 ist als nach oben weisender Betätigungsarm 33 ausgebildet, der eine gekrümmte, nach vorn oben weisende Anlagefläche 62 aufweist (FIG.9a und 9c), die mit der Anlagefläche 25 des hinteren Teils 21 des vorhergehenden Verstellelements 60 zusammenpaßt. Die Anlagefläche 62 ist durch eine Kante 65 von einer oberen Anlagefläche 68 getrennt. In seinem oberen Abschnitt weist der Betätigungsarm 33 eine nach innen weisende Nase 58 auf. Ein Schwenklagerelement 35, beispielsweise eine genietete Öse, durchgreift eine Bohrung 56 im hinteren Teil 21 und eine Bohrung 34 im mittleren Bereich der Riegelwippe 31 unter Bildung einer Schwenkachse, die quer zur Verschieberichtung 14 orientiert ist und um welche die Riegelwippe 31 mit Bezug auf das Verstellelement 60 geschwenkt werden kann. Im vorderen Abschnitt der Riegelwippe 31 ist ein Riegelteil 32 ausgebildet, welches nach außen versetzt ist. Das Riegelteil 32 weist eine schräge, nach vorn oben weisende Anlagefläche 61 und eine im Bereich einer Kante 55 daran angrenzende obere schräge Anlagefläche 69 auf. Die Riegelwippe 31 wird durch eine in FIG. 5 angedeutete Feder 36 an dem Schwenklagerelement 35 so vorgespannt, daß der Betätigungsarm 33 nach oben gedrückt ist (in der Ansicht von FIG. 9a gegen den Uhrzeigersinn).

An der Führungsschiene 75 ist eine Wange 83 mit einer unteren Anlagefläche 84 ausgebildet, die im hinteren Bereich eine Folge von in der Verschieberichtung 14 in Abstand voneinander liegenden Riegelöffnungen 85a-85c aufweist (FIG. 4b). An jeder Riegelöffnung 85a-c ist vorne eine schräge, nach hinten oben weisende Anlagefläche 86 ausgebildet.

Ein Führungselement 50, das im wesentlichen einen Arm und einen Schuh in der Art des Arms 37 und des Schuhs 40 des Befestigungselements 20 aufweist, ist nahe dem hinteren Ende der Führungsschiene 75 um eine quergerichtete dachfeste Achse 77 schwenkbar gelagert.

Mit dem Schlitten 29 oder dem Vorderende des vorderen Teils 28 des Verstellelements 60 der vordersten Lamelle 10d steht ein vorzugsweise als Gewindekabel ausgebildetes Antriebskabel 59 in Antriebsverbindung (FIG. 10). Das Antriebskabel 59 erstreckt sich zu einer in Fig. 1 nur andeutungsweise dargestellten Antriebseinheit 73. Die Antriebseinheit 73 kann in an sich bekannter Weise einen Elektromotor und ein Untersetzungsgetriebe aufweisen, wobei ein mit dem Ausgang des Untersetzungsgetriebes verbundenes Ritzel mit dem Antriebskabel 59 und einem entsprechenden Antriebskabel für die andere Dachseite in Eingriff steht. Als Antriebseinheit kann aber auch eine handbetätigte Einheit, insbesondere in Form einer Handkurbel vorgesehen sein.

Die Funktionsweise des beschriebenen Lamellendaches ist wie folgt:

In der Schließstellung des Daches sind benachbarte Lamellen 10 bzw. Befestigungselemente 20 fest miteinander gekuppelt. Für eine Verschiebung in Öffnungsrichtung (nach hinten) geschieht dies durch das Anliegen der Stirnfläche 41 eines Befestigungselements (z.B. 20c) an der Anlagefläche 27 des Mitnehmers 23 des vorhergehenden Befestigungselements (z.B. 20d). Die Kupplung in Schließrichtung (Verschiebung nach vorn) erfolgt durch das Anliegen des Schuhs 40 eines Befestigungselements (z.B. 20c) an dem hinteren Ende 48 des Kulissenschlitzes 42 des vorhergehenden Befestigungselements (z.B. 20d) und/oder durch Anliegen zweier anderer Anlageflächen an je zwei benachbarten Verstellelementen 60. Die einzelnen Lamellen sind somit gegen unbeabsichtigtes Verschieben geschützt. Dadurch, daß jedes Befestigungselement 20a bis 20d an seinem vorderen Teil 28 über den Schlitten 29 in der Führungsschiene 75 geführt ist und ferner am hinteren Ende 48 des Kulissenschlitzes 42 mit dem Schuh 40 des nachfolgenden Befestigungselements bzw. des dachfesten Führungselements 50 in Eingriff steht, ist jede einzelne Lamelle auch gegen ein unbeabsichtigtes Verschwenken gesichert. Die Riegelwippen 31 sind jeweils durch die Federn 36 so vorgespannt, daß die Anlagefläche 62 des Betätigungsarms 33 an der Anlagefläche 25 des vorhergehenden Verstellelements 60 anliegt (FIG. 4a).

Die Trägerelemente 44, und damit die Lamellen 10, liegen bei geschlossenem Dach alle parallel zur Dachebene. Das dachfeste Führungselement 50 für die letzte Lamelle 10a befindet sich in nicht ausgeschwenktem Zustand. Benachbarte Befestigungselemente 20 sind, wie oben beschrieben, durch Anlage des hinteren Teils 21 an dem Schuh 40 bzw. dem Arm 37 und dem Gegenhalter 80 wechselseitig in Verschieberichtung sicher geführt.

Zum Öffnen des Daches wird von der Antriebseinheit 73 Kraft auf die Antriebskabel 59 zu beiden Seiten der Dachöffnung 13 in nach hinten weisender Richtung übertragen. Zunächst bewirkt die Antriebsbewegung der Antriebskabel 59 in aus z.B. DE-PS-43 29 580 bekannter Weise ein Ausschwenken des Windabweisers 16. Gleichzeitig damit oder anschließend bewirkt die Antriebsbewegung der Antriebskabel 59 ein Ausschwenken des Führungselements 50 um die Achse 77. Dies kann in ebenfalls aus DE-PS-43 29 580 bekannter Weise geschehen. Dadurch wird die letzte Lamelle 10a mit ihrer hinteren Kante über die (nicht näher dargestellte) Abdichtung am hinteren Rand der Dachöffnung 13 angehoben (siehe FIG. 4b). Nachfolgend erfolgt eine Krafteinleitung durch die Antriebskabel 59 jeweils am vordersten Befestigungselement 20d. Die Kraft wird jeweils von dem Mitnehmer 23 auf die Stirnfläche 41 des jeweils nachfolgenden Befestigungselements 20 formschlüssig übertragen, wodurch sich alle Lamellen 10a bis d gemeinsam nach hinten bewegen.

Der Schuh des dachfesten Führungselements 50 wird dabei in dem Kulissenschlitz 42 des letzten Befestigungselements 20a gleitend geführt. Die weitere Verschiebung des Befestigungselements 20a nach hinten gegenüber dem Schuh des Führungselements 50 bewirkt zusätzlich zur Verschiebung eine weitere Ausstellbewegung der letzten Lamelle 10a.

Anstelle des schwenkbaren Führungselements 50 kann grundsätzlich auch ein dachfestes Führungselement vorgesehen sein, wenn der Kulissenschlitz des letzten Befestigungselements gungselements so gestaltet ist, daß auf ein zusätzliches Anheben des letzten verzichtet werden kann. Eine Anordnung dieser Art ist in der DE-Patentanmeldung 19542884.6 näher erläutert.

Die Ausstellbewegung des Verstellelements 60 und des Trägerelements 44 erfolgt in unterschiedlicher Weise, da der Führungsstift 46 bzw. die Achse des Schwenkbolzens 30, die als Drehpunkte wirken, in der Verschieberichtung 14 in Abstand voneinander liegen. Zum Ausgleich der unterschiedlichen Schwenkbewegung sind die beiden Elemente 44, 60 an ihrem hinteren Ende über den Schwenkbolzen 45 drehbar miteinander verbunden, so daß eine relative Drehbewegung des Verstellelements 60 gegenüber dem Trägerelement 44 stattfindet. Da sich die Stirnfläche 41 des Verstellelements 60 vor der Achse des Schwenkbolzens 30, d.h. dem Drehpunkt der Ausstellbewegung, befindet, bewirkt das Anheben des hinteren Endes des Verstellelements 60 eine Absenkung der Stirnfläche 41 gegenüber dem Mitnehmer 23 des vorangehenden Befestigungselements 20b. Der Arm 37 und damit der Schuh 40 des Verstellelements 60 befindet sich hinter der Achse des Lagers 30, so daß der Schuh 40 und damit auch das hintere Ende des vorhergehenden Befestigungselements 20b ebenfalls leicht angehoben werden. Durch entsprechende Wahl der Drehhebel bzw. Positionen der Drehpunkte (Führungsstifte bzw. Lagerachsen) ist sichergestellt, daß die Hinterkante der vorletzten Lamelle 10b durch das Ausschwenken der nachfolgenden (letzten) Lamelle 10a über die Vorderkante der letzten Lamelle 10a angehoben wird, so daß ein Übereinanderschieben der aufeinanderfolgenden Lamellen stattfinden kann. Die Befestigungselemente 20a bis d sind also in solcher Weise gekoppelt, daß eine Ausschwenkbewegung des letzten Befestigungselements 20a eine sich nach vorn fortpflanzende und dabei sich stark abschwächende Ausschwenkbewegung der vorangehenden Befestigungselemente 20b bis d bewirkt. Durch die Vorspannung über die Feder 36 wird der Betätigungsarm 33 jeder Relativbewegung zwischen benachbarten Verstellelementen 60 nachgeführt, so daß er immer an der Anlagefläche 25 des hinteren Teils 21 anliegt. Die Vorspannung durch die Feder 36 verhindert zuverlässig, daß das Riegelteil 32 bei der Öffnungsbewegung während das Passierens einer Riegelöffnung 85 z.B. durch eine Erschütterung in diese einrastet.

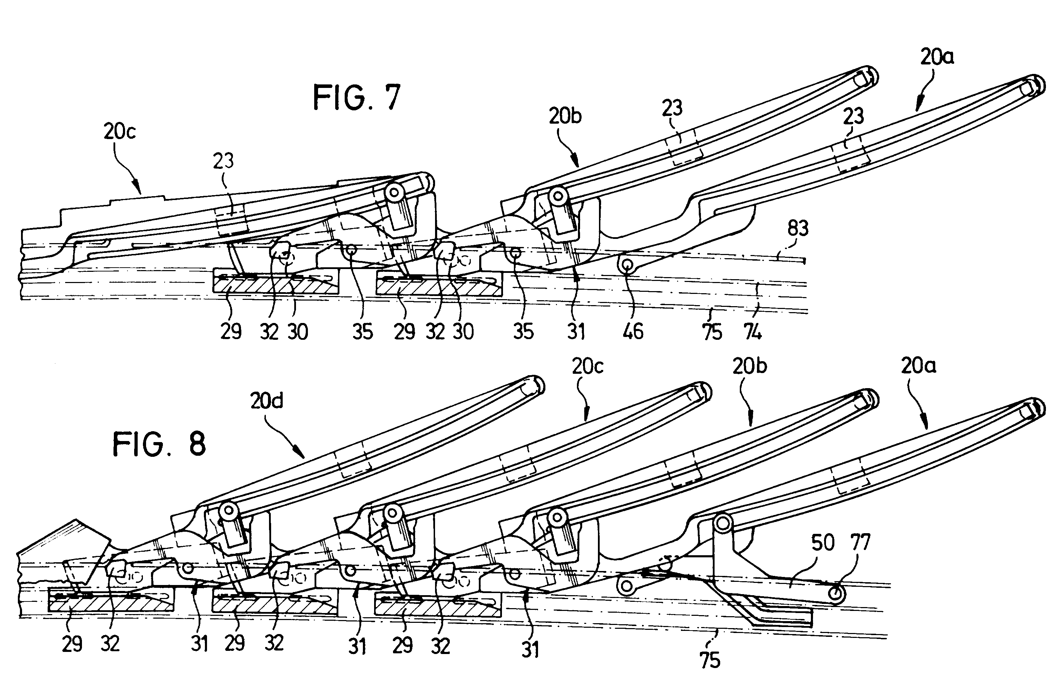

Das Riegelteil 32 ist so angeordnet, daß es in etwa auf Höhe der Achse des Schwenkbolzens 30 liegt, welche den Drehpunkt der Ausstellbewegung bildet. Dadurch ändert sich während der zunehmenden Ausstellbewegung des Verstellelements 60 im Lauf der Öffnungsbewegung die relative Höhe des Riegelteils 32 bezüglich der Wange 83 der Führungsschiene 75 im wesentlichen nicht. Es findet dabei jedoch eine Drehbewegung des Riegelteils 32 statt. Die obere Anlagefläche 69 des Riegelteils 32 liegt zunehmend an der unteren Anlagefläche 84 der Wange 83 der Führungsschiene 75 an. Durch eine entsprechende schräge Gestaltung der oberen Anlagefläche 69 des Riegelteils 32 bewirkt diese Anlage eine gewisse Drehung der Riegelwippe 31 im Uhrzeigersinn in Fig. 4 bis 7, d.h. der Betätigungsarm 33, und damit die Anlagefläche 62, bewegen sich nach oben. Die Krümmung der Anlagefläche 27 des Mitnehmers 23 bzw. der Stirnseite 41 des vorderen Teils 28 sind so gewählt, daß ab einer bestimmten Ausschwenkstellung des Verstellelements 60 die Riegelwippe 31 über den Schwenkbolzen 30 durch Anlage der oberen Anlagefläche 69 an der Unterseite 84 der Wange 83 Antriebskraft von dem vorhergehenden Verstellelement 60 auf das nachfolgende Verstellelement 60 überträgt. Dies ist insofern vorteilhaft, als die Überlappung der Anlagefläche 27 des Mitnehmers 23 mit der Stirnfläche 41 mit zunehmender Ausschwenkung immer geringer wird, so daß der Druck immer größer wird, was zu einer Beschädigung der entsprechenden Anlageflächen 27 und 41 und insbesondere der diese Flächen begrenzenden Kanten 67 bzw. 70 führen könnte. Die entsprechenden Elemente werden so dimensioniert, daß die Kraftübertragung so rechtzeitig auf die Riegelwippe 31 übergeht, daß eine solche Beschädigung auf jeden Fall vermieden wird. Auf diese Weise wird der Kraftschluß zwischen den beiden letzten Befestigungselementen 20a,b bereits von der entsprechenden Riegelwippe 31 übernommen, wenn sich die Oberkante der Stirnfläche 41 des letzten Befestigungselements 20a noch nicht ganz unter die Unterkante 67 der Anlagefläche 27 des Mitnehmers 23 des vorletzten Befestigungselements 20b abgesenkt hat.

Sobald die Kante 55 zwischen den Anlageflächen 61 und 69 des Riegelteils 32 die vordere Anlagefläche 86 der letzten Riegelöffnung 85a erreicht hat, kann die Anlagefläche 61 auf der Anlagefläche 86 abgleiten, wodurch sich das Riegelteil 32 nach oben in die Riegelöffnung 85a hineinbewegen kann, was wiederum ein Abgleiten der Anlagefläche 62 bzw. der Kante 65 des Riegelteils auf der geneigten Anlagefläche 25 des Verstellelements 60 nach unten erlaubt. Auf diese Weise ist nun der Kraftschluß zwischen den beiden letzten Befestigungselementen 20a und 20b aufgehoben. Diese Befestigungselemente sind jetzt entkuppelt. Das vorletzte Befestigungselement 20b kann sich nun relativ zu dem letzten verschieben.

Das auf die Riegelwippe 31 wirkende Drehmoment ergibt sich als Skalarprodukt der tangential zum Kulissenschlitz 42 des Befestigungselements 20b orientierten Komponente F der auf das Befestigungselement 20b übertragenen Antriebskraft und des Abstandsvektors zwischen dem Drehpunkt der Riegelwippe 31 im Schwenklagerelement 35 und der Krafteinleitungsstelle an der Kante 65 des Betätigungsarms 33 der Riegelwippe 31, das heißt als Produkt F mal X in FIG. 6. Die am Riegelteil 32 wirkende Kraft wird daher durch die entsprechenden Abstände von Betätigungsarm 33 und Riegelteil 32 von dem Schwenklagerelement 35 bestimmt.

Das Riegelteil 32 wird nun durch die Anlage der oberen Anlagefläche 68 des Betätigungsarms 33 an der Unterseite 22 des hinteren Teils 21 des Verstellelements 60 in Eingriff mit der letzten Riegelöffnung 85a gehalten und bewirkt auf diese Weise eine dachfeste Verriegelung des letzten Befestigungselements 20a. Die letzte Lamelle 10a ist somit gegen Vor- und Zurückbewegung gesichert.

Der weitere Öffnungsvorgang erfolgt analog wie bereits beschrieben, wobei nun anstelle des letzten Befestigungselements 20a das vorletzte Befestigungselement 20b durch Verschiebung gegenüber dem Schuh 40 des letzten Befestigungselements 20a ausgeschwenkt wird. Die Funktion des dachfesten Führungselements 50 wird folglich durch den Schuh 40 bzw. das vordere Teil 28 des letzten, nunmehr dachfest verriegelten Befestigungselements 20a übernommen. Wenn das vorletzte Befestigungselement 20b voll ausgeschwenkt ist, kommt die hintere Stirnfläche 51 des vorletzten Befestigungselements 20b mit dem Puffer 52 zur Anlage an der vorderen Stirnseite 41 des letzten Befestigungselements 20a.

Die Kraftentkupplung zweier Befestigungselemente (z.B. 20b,c) bei der Öffnungsbewegung bewirkt jeweils, daß das vorhergehende Befestigungselement (20c) durch das Niederdrücken des Betätigungsarms 33 in die Riegelsteinöffnung 85b das jeweils nachfolgende Befestigungselement (20b) dachfest verriegelt.

Der Öffnungsvorgang kann nun solange analog weitergeführt werden, bis auch das vorderste Befestigungselement 20d voll ausgeschwenkt ist und die Dachöffnung 13 damit maximal freigegeben ist. Mit Ausnahme der vordersten Lamelle 10d sind dann alle Lamellen in voll ausgeschwenkter Position dachfest verriegelt. Die vorderste Lamelle 10d ist in ihrer Position dadurch verriegelt, daß der Antrieb über die Antriebskabel 59 in an sich bekannter Weise starr und selbsthemmend ausgeführt ist.

Wird nun eine Schließbewegung eingeleitet, so wird von der Antriebseinheit 73 Kraft auf die an der ersten Lamelle 10d angreifenden Antriebskabel 59 zu beiden Seiten der Dachöffnung 13 in nach vorn weisender Richtung übertragen. Die nicht verriegelte erste Lamelle 10d bewegt sich dadurch nach vorn. Der Schuh 40 des zweiten Befestigungselements 20c gleitet dabei in dem Kulissenschlitz 42 des ersten Befestigungselements 20d. Das erste Befestigungselement 20d wird durch die Schließbewegung nach vorn wieder zum Teil zurückgeschwenkt. Eine Bewegung des zweiten Befestigungselements 20c in Schließrichtung kann nicht stattfinden, da dessen Riegelteil 32 über die Anlage des Betätigungsarms 33 der Riegelwippe an der Unterseite 22 des ersten Befestigungselements 20d noch mit der Riegelöffnung 85c in Eingriff gehalten wird.

Sobald die Kante 65 des Betätigungsarms 33 das hintere Ende der Unterseite 22 des hinteren Teils 21 des Befestigungselements 20d erreicht hat, kann sich der Betätigungsarm 33 nach oben bewegen, so daß ein Abgleiten der Anlagefläche 61 des Riegelteils 32 auf der Anlagefläche 86 der Riegelöffnung 85c möglich wird. Die Krafteinleitung in das Befestigungselement 20c geschieht dabei , wie oben erwähnt, durch das Anliegen des Schuhs 40 des Befestigungselements 20c an dem hinteren Ende 48 des Kulissenschlitzes 42 des vorhergehenden Befestigungselements 20d oder durch Anliegen zweier anderer Anlageflächen an je zwei benachbarten Verstellelementen 60. Das Riegelteil 32 bewegt sich dadurch aus der Riegelöffnung 85c heraus, wodurch die dachfeste Verriegelung des Befestigungselements 20c aufgehoben wird. Die benachbarten Befestigungselemente 20d und 20 c sind nun für die Schließbewegung miteinander gekuppelt. Im weiteren wird das zweite Befestigungselement 20c von dem ersten 20d mit nach vorn bewegt. Zunächst sind die beiden Befestigungselemente 20c und 20d in Öffnungsrichtung über die Riegelwippe 31 des zweiten Befestigungselements 20c gekuppelt, später über die Anlagefläche 27 des Mitnehmers 23 des ersten Befestigungselements 20d und die Stirnfläche 41 des zweiten Befestigungselements 20c. Diese Kupplung in Öffnungsrichtung würde z.B. bei einer Umkehrung der Antriebsrichtung wieder wirksam.

Der weitere Schließvorgang erfolgt für die übrigen Befestigungselemente bzw. Lamellen analog, wobei schließlich durch die Schließbewegung des vorletzten Befestigungselements 20b die dachfeste Verriegelung des letzten Befestigungselements 20a in der Riegelöffnung 85a gelöst wird. Erreicht der in das letzte Befestigungselement 20a eingreifende Schuh des dachfesten Führungselements 50 das hintere Ende 48 des Kulissenschlitzes 42, so wird das Führungselement 50 wieder zurückgeschwenkt und alle Lamellen liegen wieder in einer Ebene parallel zur Dachebene. Der Schließvorgang erfolgt also in der Art, daß immer ein Teil der Lamellen miteinander gekuppelt ist und sich gemeinsam in Schließrichtung bewegt, während der übrige Teil der Lamellen dachfest verriegelt ist und nicht an der Schließbewegung teilnehmen kann. Die letzte bewegliche und die erste verriegelte Lamelle sind dabei jeweils voneinander entkuppelt. Um das mechanische Spiel gering zu halten, findet die Ankupplung der ersten verriegelten Lamelle an die letzte bewegliche Lamelle sehr kurz nach der Entriegelung der ersten verriegelten Lamelle statt, d.h. nahezu zeitgleich dazu.

Bei der beschriebenen Ausführungsform sind alle Befestigungselemente 20 (eventuell mit Ausnahme des ersten und/oder letzten) sowie alle Riegelwippen 31 identisch ausgebildet. Die Riegelwippen sind jeweils auf gleiche Weise an dem jeweiligen Befestigungselement angebracht. Die Befestigungselemente sind in Längsrichtung in einer Ebene angeordnet. Die Schwenkbewegungen aller Riegelwippen liegen folglich in der selben Ebene, die senkrecht auf die Dachfläche steht und die Öffnungs- bzw. Schließrichtung beinhaltet. Alle Befestigungselemente und Riegelsteine liegen auch auf gleicher Höhe relativ zu der dachfesten Führungsschiene.

Erfindungsgemäße Ausführungsformen sind nicht darauf beschränkt, daß die Riegelwippen, wie bisher beschrieben, um eine Achse, die annähernd parallel zur Dachfläche und senkrecht zur Verschieberichtung steht, schwenkbar sind. Die erfindungsgemäße Funktion kann beispielsweise auch durch eine Verschwenkung der Riegelwippen um Achsen senkrecht zur Dachfläche erreicht werden.

### Bezugszeichenliste

- Fahrzeugdach: **9**
- Schiebelamellen: **10a** bis **d**
- feste Dachfläche: **11**
- Kraftfahrzeug: **12**
- Dachöffnung: **13**
- Verschieberichtung: **14**
- Windabweiser: **16**
- Befestigungselement: **20a** bis **d**
- hinterer Teil von 60: **21**
- Unterseite von 21: **22**
- Mitnehmer: **23**
- Ausnehmung in 23: **24**
- Anlagefläche von 53: **25**
- Innenfläche von 21: **26**
- Anlagefläche von 23: **27**
- vorderer Teil von 60: **28**
- Schlitten: **29**
- Schwenkbolzen: **30**
- Riegelwippe: **31**
- Riegelteil: **32**
- Betätigungsarm: **33**
- Bohrung in 31: **34**
- Schwenklagerelement: **35**
- Feder: **36**
- Arm: **37**
- Bohrung in 37: **38**
- Stift: **39**
- Schuh: **40**
- vordere Stirnfläche von 28: **41**
- Kulissenschlitz: **42**
- Zapfen von 29: **43**
- Trägerelement: **44**
- Schwenkbolzen: **45**
- Führungsstift: **46**
- Befestigungsöffnungen: **47**
- hinteres Ende von 42: **48**
- vorderes Ende von 42: **49**
- dachfestes Führungselement: **50**
- hintere Stirnfläche von 28: **51**
- Puffer auf 51: **52**
- hinteres Ende von 21: **53**
- Kante zw. 61 u. 69: **55**
- Bohrung: **56**
- Nase von 33: **58**
- Antriebskabel: **59**
- Verstellelement (21+28): 60
- vordere obere Anlagefläche von 32: **61**
- vordere obere Anlagefläche von 33: **62**
- Kante: 64
- Oberkante von 33: **65**
- Unterkante: **67**
- obere Anlagefläche von 33: **68**
- obere Anlagefläche von 32: **69**
- Oberkante von 41: **70**
- Antriebseinheit: **73**
- Führungsbahn: **74**
- Führungsschiene: **75**
- Schwenkachse: **77**
- Gegenhalter: 80
- äußere Anlagefläche von 80: **81**
- Wange von 75: **83**
- Unterseite von 83: **84**
- Riegelöffnung in 75: **85a** bis **c**
- untere Anlagefläche von 85: **86**
- Bohrung: **87**

## Patentansprüche

1. Fahrzeugdach mit einer Folge von mindestens zwei Deckelelementen zum wahlweisen Verschließen oder mindestens teilweisen Freigeben einer Dachöffnung (13) in einer Dachfläche (11), wobei die Deckelelemente in der Schließstellung aneinander angrenzen und einen flächigen Verbund bilden, jedes Deckelement an seinen Schmalseiten jeweils mit einem schwenkbaren Befestigungselement (20a-20d) verbunden ist und die Befestigungselemente (20a-20d) entlang einer dachfesten Führungsbahn (74) geführt sind, und wobei
jeweils zwei benachbarte Befestigungselemente (20a-20d) für eine gemeinsame Bewegung in Öffnungs- und Schließrichtung (14) gekuppelt sind, solange sie nicht voll ausgeschwenkt sind, und entkuppelt sind, sobald eines der beiden Befestigungselement (20a-20d) seine voll ausgeschwenkte Stellung erreicht hat, und derart miteinander in Eingriff stehen, daß sie in entkuppeltem Zustand unter Ausschwenkung des noch nicht voll ausgeschwenkten Befestigungselements (20a-20d) gegeneinander verstellbar sind,
ein Befestigungselement (20a-20d) in der voll ausgeschwenkten Lage unter dem Einfluß der Öffnungsbewegung des einen benachbarten Befestigungselements (20a-20d) jeweils über ein Verriegelungsselement (31) fest mit der dachfesten Führungsbahn (74) verriegelbar ist, und
die Verriegelung eines voll ausgeschwenkten Befestigungselements (20a-20d) mit der dachfesten Führungsbahn (74) unter dem Einfluß der Schließbewegung des einen benachbarten Befestigungselements (20a-20d) selbsttätig lösbar ist,
**dadurch gekennzeichnet,**
daß das Verriegelungselement (31) jeweils gegenüber dem Befestigungselement (20a-d) schwenkbar ist.

2. Fahrzeugdach nach Anspruch 1, dadurch gekennzeichnet, daß das Verriegelungselement (31) so ausgebildet ist, daß es mindestens während einer bestimmten Phase der Bewegung der Deckelelemente (10a-d) zwischen unverriegelten benachbarten Befestigungselementen (20) einen Kraftschluß bewirkt.

3. Fahrzeugdach nach Anspruch 2, dadurch gekennzeichnet, daß das Verriegelungselement (31) des hinteren von zwei Befestigungselementen (20) bei der Öffnungsbewegung von einer Stellung kurz vor der Entkupplung mit dem benachbarten Befestigungselement bis zur Entkupplung den Kraftschluß zwischen diesen Elementen bildet.

4. Fahrzeugdach nach einem der vorhergehenden Ansprüche, dadurch gekennzeichnet, daß das Verriegelungselement (31) als Riegelwippe ausgebildet ist, die in ihrem Mittelabschnitt schwenkbar gelagert ist, an ihrem einen Endabschnitt ein Riegelteil (32) und an ihrem anderen Endabschnitt einen Betätigungsarm (33) aufweist.

5. Fahrzeugdach nach Anspruch 4, dadurch gekennzeichnet, daß der Endabschnitt mit dem Riegelteil (32) bezüglich der Fahrtrichtung vorn liegt.

6. Fahrzeugdach nach Anspruch 6, dadurch gekennzeichnet, daß der Endabschnitt mit dem Riegelteil (32) gleitend in der Höhe geführt ist.

7. Fahrzeugdach nach Anspruch 5 oder 6, dadurch gekennzeichnet, daß die Riegelwippe (31) so vorgespannt ist, daß der Betätigungsarm (33) der Riegelwippe nach oben gedrückt wird.

8. Fahrzeugdach nach Anspruch 7, dadurch gekennzeichnet, daß der Betätigungsarm (33) der Riegelwippe (31) eines Befestigungselements (20) eine vordere Anlagefläche (62) aufweist, welche aufgrund der Vorspannung an einer hinteren Anlagefläche (25) des in Fahrtrichtung vorhergehenden Befestigungselements anliegt, solange das Befestigungselement nicht voll ausgeschwenkt ist.

9. Fahrzeugdach nach einem der Ansprüche 4 bis 8, dadurch gekennzeichnet, daß die feste Führungsbahn (74) zu beiden Dachseiten jeweils von einer Führungsschiene (75) gebildet ist, die Riegelöffnungen (85a-c) zum dachfesten Verriegeln der Befestigungselemente (20a-c) aufweist.

10. Fahrzeugdach nach Anspruch 9, dadurch gekennzeichnet, daß an dem Riegelteil (32) eine obere Anlagefläche (69) ausgebildet ist, für welche die Führungsschiene (75) in den Abschnitten zwischen den Riegelöffnungen (85a-c) einen Anschlag derart bildet, daß kein vollständiges Abgleiten zwischen der hinteren Anlagefläche (25) eines Befestigungselements (20) und der vorderen Anlagefläche (62) des Betätigungsarmes (33) der Riegelwippe (31) des nachfolgenden Befestigungselements möglich ist, so daß diese Anlageflächen für einen Kraftschluß in Öffnungsrichtung zwischen benachbarten Befestigungselementen sorgen können.

11. Fahrzeugdach nach Anspruch 9 oder 10, dadurch gekennzeichnet, daß bei der Entkupplung benachbarter Befestigungselemente (20) die Riegelwippe (31) des nachfolgenden Befestigungselements durch das Abgleiten zwischen der hinteren Anlagefläche (25) des vorhergehenden Befestigungselement und der vorderen Anlagefläche (62) des Betätigungsarmes (33) der Riegelwippe im Uhrzeigersinn verschwenkt wird, wodurch das Riegelteil (32) der Riegelwippe von unten in Eingriff mit der entsprechenden Riegelöffnung (85a-c) der Führungsschiene (75) kommt.

12. Fahrzeugdach nach Anspruch 11, dadurch gekennzeichnet, daß bei benachbarten, entkuppelten Befestigungselementen das Riegelteil (32) der Riegelwippe (31) des nachfolgenden Befestigungselements (20) durch Anlage einer an dem Betätigungsarm (33) ausgebildeten oberen Anlagefläche (68) an der Unterseite (22) des vorangehenden Befestigungselements mit der Riegelöffnung (85a-c) in Eingriff gehalten wird.

13. Fahrzeugdach nach Anspruch 12, dadurch gekennzeichnet, daß das Riegelteil (32) der Riegelwippe (31) so nahe bei der Schwenkachse der Schwenkbewegung des Befestigungselements (20) bezüglich der Führungsschiene (75) liegt, daß das Ausschwenken des Befestigungselements keine wesentliche Höhenbewegung des Riegelteils bezüglich der Führungsschiene bewirkt.

14. Fahrzeugdach nach einem der Ansprüche 11 bis 13, dadurch gekennzeichnet, daß das Riegelteil (32) eine vordere Anlagefläche (61) aufweist, die von unten an einer in der Riegelöffnung (85a-c) ausgebildeten Gegenfläche (86) anliegt, wenn das Riegelteil in die Riegelöffnung eingreift.

15. Fahrzeugdach nach Anspruch 14, dadurch gekennzeichnet, daß die vordere Anlagefläche (61) des Riegelteils (32) nach vorn geneigt ist, so daß die Anlagefläche auf der Gegenfläche (86) der Riegelöffnung (85a-c) abgleiten kann, um die dachfeste Verriegelung zu lösen.

16. Fahrzeugdach nach einem der vorangehenden Ansprüche, dadurch gekennzeichnet, daß bei zwei benachbarten, voll ausgeschwenkten Befestigungselementen (20) eine an den vorangehenden Befestigungselement ausgebildete hintere Stirnfläche (51) über ein Dämpfungselement (52) an einer an dem nachfolgenden Befestigungselement ausgebildeten vorderen Stirnfläche (41) anliegt.

17. Fahrzeugdach nach einem der vorhergehenden Ansprüche, dadurch gekennzeichnet, daß das Befestigungselement (20a-d) in seinem vorderen Abschnitt schwenkbar mit einem entlang der Führungsbahn (74) gleitend geführten Schlitten (29) verbunden ist.

18. Fahrzeugdach nach einem der vorhergehenden Ansprüche, dadurch gekennzeichnet, daß benachbarte Befestigungselemente (20) dadurch höhengeführt miteinander verstellbar verbunden sind, daß ein an dem einen Befestigungselement ausgebildeter Schuh (40) in einen seitlich in dem vorhergehenden Befestigungselement ausgebildeten Kulissenschlitz (42) eingreift.

19. Fahrzeugdach nach Anspruch 18, dadurch gekennzeichnet, daß benachbarte Befestigungselemente (20) dadurch seitlich geführt miteinander verstellbar verbunden sind, daß der Schuh (40) des hinteren Befestigungselements von einer Seite in den Kulissenschlitz (42) des vorderen Befestigungselements eingreift, während ein an dem hinteren Befestigungselement ausgebildeter Gegenhalter (80) als entgegengesetzte Anlagefläche vorgesehen ist.

20. Fahrzeugdach nach Anspruch 19, dadurch gekennzeichnet, daß benachbarte Befestigungselemente (20) für die gemeinsame Bewegung in Öffnungsrichtung durch eine in Abhängigkeit von einer Schwenkbewegung relativ zueinander ein- und ausrückbare Kupplung kuppelbar sind, die von einem Mitnehmer (23) an dem vorderen Befestigungselement und der vorderen Stirnfläche (41) des hinteren Befestigungselements gebildet wird, die in Eingriff miteinander stehen, wenn die Deckelelemente (10a-d) Teil des flächigen Verbundes sind, sowie außer Eingriff miteinander kommen, wenn das eine der Befestigungselemente sich seiner voll ausgeschwenkten Lage mindestens angenähert hat.

21. Fahrzeugdach nach Anspruch 20, dadurch gekennzeichnet, daß der Mitnehmer (23) eine Ausnehmung (24) aufweist, durch welche sich der Gegenhalter (80) des benachbarten Befestigungselements hindurch bewegen kann.

22. Fahrzeugdach nach einem der vorhergehenden Ansprüche, dadurch gekennzeichnet, daß das jeweils einem Befestigungselement (20) zugeordnete Verriegelungselement (31) unmittelbar von dem einen der beiden benachbarten Befestigungselemente betätigbar ist.

23. Fahrzeugdach nach einem der vorhergehenden Ansprüche, dadurch gekennzeichnet, daß die Deckelelemente als Lamellen (10a-d) ausgebildet sind.

## Claims

1. A motor vehicle roof with a series of at least two cover elements for optionally closing or at least partially opening a roof aperture (13) in a roof area (11), the roof elements abutting one another in the closed position and forming a flat composite structure, each roof element being on its narrow sides connected to a pivotable fixing element (20a-20d), the fixing elements (20a-20d) being guided along a guideway fixed to the roof and whereby in each case two adjacent fixing elements (20a-20d) are coupled for joint movement into the opening and closing directions (14) so long as they are not fully swung out, and uncoupled as soon as one of the two fixing elements (20a-20d) has reached its fully swung-out position and so engage each other that in the uncoupled state they can be adjusted in respect of each other with an outwards pivoting of the fixing element (20a-20d) which is still not swung out fully, one fixing element (20a-20d) being adapted to be locked in the fully outwardly pivoted position under the effect of the opening movement of the adjacent fixing element (20a-20d) and in each case by means of a locking element (31) which secures it rigidly to the guideway (74) fixed to the roof, the locking of a fully outwardly pivoted fixing element (20a-20d) to the guideway (74) fixed to the roof being automatically separable under the effect of the closing movement of the adjacent fixing element (20a-20d)
characterised in that
the locking element (31) is in each case pivotable in relation to the fixing element (20a-20d).

2. A vehicle roof according to Claim 1, characterised in that the locking element (31) is so constructed that it produces a force fit between unlocked neighbouring fixing elements (20) during a specific phase in the movement of the cover elements (10a-d).

3. A vehicle roof according to Claim 2, characterised in that upon the opening position from a position just prior to decoupling from the adjacent fixing element and until decoupling, the locking element (31) of the rear of two fixing elements (20) constitutes the force fit between these elements.

4. A vehicle roof according to one of the preceding Claims, characterised in that the locking element (31) is constructed as a latch rocker which is pivotally mounted in its middle section and has at one end portion a latch part 32 and an actuating arm 33 at its other end portion.

5. A vehicle roof according to Claim 4, characterised in that the end portion with the latch part 32 is in front in relation to the direction of travel.

6. A vehicle roof according to Claim 6, characterised in that the end portion with the latch part (32) is guided to slide vertically.

7. A vehicle roof according to Claim 5 or 6, characterised in that the latch rocker (31) is so pre-tensioned that the actuating arm (33) of the latch rocker is pressed upwards.

8. A vehicle roof according to Claim 7, characterised in that the actuating arm (33) of the latch rocker (31) of a fixing element (20) has a front bearing surface (62) which, by reason of the initial tension, bears on a rear bearing surface (25) of the - in the direction of travel - leading fixing element as long as the fixing element is not completely swung out.

9. A vehicle roof according to one of Claims 4 to 8, characterised in that the fixed guideway (74) is formed on both sides of the roof in each case by a guide rail (75) which comprises latch openings (85a-c) to lock the fixing elements (20a-c) rigidly to the roof.

10. A vehicle roof according to Claim 9, characterised in that there is on the latch part (32) an upper bearing surface (69) for which the guide rail (75), in the portions between the latch openings (85a-c) so forms an abutment that no complete sliding is possible between the rear bearing surface (25) of a fixing element (20) and the front bearing surface (62) of the actuating arm (33) of the latch rocker (31) of the following fixing element so that these bearing surfaces can provide for a force fit in the opening direction and between adjacent fixing elements.

11. A vehicle roof according to Claim 9 or 10, characterised in that, upon the decoupling of adjacent fixing elements (20), the latch rocker (31) of the next fixing element is, by sliding between the rear bearing surface (25) of the preceding fixing element and the front bearing surface (62) of the actuating arm (33) of the latch rocker, pivoted in a clockwise direction so that the latch part (32) of the latch rocker comes from below into engagement with the corresponding latch opening (85a-c) of the guide rail (75).

12. A vehicle roof according to Claim 11, characterised in that in the case of neighbouring decoupled fixing elements, the latch part (32) of the latch rocker (31) of the subsequent fixing element (20) is, by bearing on an upper bearing surface (68) constructed on the actuating arm (33) and on the underside (22) of the preceding fixing element, maintained in engagement with the latch opening (85a-c).

13. A vehicle roof according to Claim 12, characterised in that the latch part (32) of the latch rocker (31) is situated so close to the pivot axis of the pivoting movement of the fixing element (20) in relation to the guide rail (75) that outwards pivoting of the fixing element does not produce any substantial upwards movement of the latch part in relation to the guide rail.

14. A vehicle roof according to one of Claims 11 to 13, characterised in that the latch part (32) has a front bearing surface (61) which bears from below on a mating surface (86) constructed in the latch opening (85a-c) when the latch part engages the latch opening.

15. A vehicle roof according to Claim 14, characterised in that the front bearing surface (61) of the latch part (32) is inclined forwards so that the bearing surface is able to slide on the mating surface (86) of the latch opening (85a-c) in order to be able to release the rigid lock on the roof.

16. A vehicle roof according to one of the preceding Claims, characterised in that in the case of two adjacent fully outwardly pivoted fixing elements (20), a rear end face (51) constructed on the preceding fixing element bears through a damping element (52) on the front end face (41) constructed on the subsequent fixing element.

17. A vehicle roof according to one of the preceding Claims, characterised in that in its front portion the fixing element (20a-d) is pivotally connected to a carriage (29) guided to slide along the guideway (74).

18. A vehicle roof according to one of the preceding Claims, characterised in that adjacent fixing elements (20) are so connected to one another to be jointly vertically displaceable that a shoe (40) constructed on one fixing element engages a crank slot (42) constructed on the side of the preceding fixing element.

19. A vehicle roof according to Claim 18, characterised in that adjacent fixing elements (20) are so connected to one another to be laterally guided in their displacement that the shoe (40) of the rear fixing element engages the crank slot (42) of the front fixing element from one side while a steadying member (80) which is constructed on the rear fixing element is provided as an opposing bearing surface.

20. A vehicle roof according to Claim 19, characterised in that adjacent fixing elements (20) can, for joint movement in an opening direction, be coupled by a coupling which can be engaged and disengaged as a function of a pivoting movement in relation to each other, the coupling being constituted by a driver (23) on the front fixing element and the front end face (41) of the rear fixing element which are engaged with each other when the cover elements (10a-d) are part of the flat integrated system and are disengaged when one of the fixing elements is at least approximately in its completely outwardly pivoted position.

21. A vehicle roof according to Claim 20, characterised in that the driver (23) comprises a recess (24) through which the steadying member (80) of the adjacent fixing element can be moved.

22. A vehicle roof according to one of the preceding Claims, characterised in that the locking element (31) associated with the respective fixing element (20) can be actuated directly by one of the two adjacent fixing elements.

23. A vehicle roof according to one of the preceding Claims, characterised in that the cover elements are constructed as louvres (10a-d).

## Revendications

1. Toit de véhicule comportant une série d'au moins deux éléments de couverture permettant à volonté de fermer ou de libérer au moins en partie une ouverture de toit (13) dans une surface de toit (11), dans lequel :
- les éléments de couverture, en position de fermeture, se délimitent les uns les autres et forment un assemblage plat, chaque élément de couverture étant relié le long de chacun de ses côtés étroits à un élément de fixation (20a-20d) basculant, ces éléments basculants se déplaçant dans une piste de guidage (74) solidaire du toit,
- chaque fois deux éléments de fixation voisins (20a-20d) sont accouplés pour effectuer un déplacement commun selon la direction (14) d'ouverture et de fermeture, aussi longtemps qu'ils ne sont pas totalement relevés par basculement, et sont désaccouplés dès que l'un de ces deux éléments a atteint sa position totalement basculée, pour se trouver en prise entre eux de manière qu'ils peuvent se déplacer l'un par rapport à l'autre, à l'état désaccouplé quand bascule l'élément de fixation (20a-20d) qui n'a pas encore totalement basculé,
- un élément de fixation (20a-20d) en position totalement basculée sous l'influence du mouvement d'ouverture d'un élément de fixation (20a-20d) voisin, peut être verrouillé solidement sur la piste de guidage (74) solidaire du toit, par l'intermédiaire d'un élément de verrouillage (31) et le verrouillage d'un élément de fixation (20a-20d) totalement basculé, sur la piste de guidage (74) solidaire du toit peut se déclencher automatiquement sous l'influence du mouvement de fermeture d'un élément de fixation (20a-20d) voisin ;
caractérisé en ce que
l'élément de fixation (31) peut basculer par rapport à chacun des éléments de fixation (20a-20d).

2. Toit de véhicule selon la revendication 1,
caractérisé en ce que
l'élément de verrouillage (31) a une configuration telle qu'au moins pendant une certaine phase du mouvement des éléments de couverture (10a-10d), il produit un verrouillage à force entre des éléments de fixation voisins (20) non verrouillés.

3. Toit de véhicule selon la revendication 2,
caractérisé en ce que
l'élément de verrouillage (31) appartenant à celui de deux éléments de fixation (20) qui se trouve en arrière lors du déplacement d'ouverture établit entre ces éléments de fixation un verrouillage à force, à partir d'une position précédant de peu le désaccouplement avec l'élément de fixation voisin et jusqu'au désaccouplement de ces éléments.

4. Toit de véhicule selon une des revendications précédentes,
caractérisé en ce que
l'élément de verrouillage (31) est constitué par un levier de verrouillage qui est monté basculant à sa partie centrale et présente à une de ses extrémités une partie de verrouillage (32) et à son autre extrémité un bras d'actionnement (33).

5. Toit de véhicule selon la revendication 5,
caractérisé en ce que
l'extrémité portant la partie de verrouillage (32) se trouve en avant par rapport au sens de déplacement du véhicule.

6. Toit de véhicule selon la revendication 5,
caractérisé en ce que
l'extrémité portant la partie de verrouillage (32) se déplace en hauteur par glissement.

7. Toit de véhicule selon la revendication 5 ou 6,
caractérisé en ce que
le levier basculant de verrouillage (31) est soumis à une précontrainte qui pousse le bras d'actionnement (33) du levier vers le haut.

8. Toit de véhicule selon la revendication 7,
caractérisé en ce que
le bras d'actionnement (33) du levier (31) appartenant à un élément de fixation (20) comporte une portée avant d'appui (62) que la précontrainte applique sur une butée arrière d'appui (25) appartenant à l'élément de fixation qui le précède dans le sens de déplacement du véhicule, tant que l'élément de fixation n'est pas totalement basculé.

9. Toit de véhicule selon une des revendications 4 à 8,
caractérisé en ce que
la piste fixe de guidage (75) située de chaque côté du toit est constituée par un rail de guidage (75) présentant des ouvertures de verrouillage (85a-c) servant à verrouiller solidairement au toit les éléments de fixation (20a-c).

10. Toit de véhicule selon la revendication 9,
caractérisé en ce que
la pièce de verrouillage (32) présente une portée supérieure d'appui (69) pour laquelle le rail de guidage (75) constitue dans les parties situées entre les ouvertures de verrouillage (85a-c), une butée, aucun glissement complet n'étant possible entre la portée arrière d'appui (25) d'un élément de fixation (20) et la portée avant d'appui (62) du bras d'actionnement (33) du levier de verrouillage (31) appartenant à l'élément de fixation suivant, de sorte que ces portées d'appui peuvent assurer un verrouillage à force dans la direction d'ouverture entre des éléments de fixation voisins.

11. Toit de véhicule selon la revendication 9 ou 10,
caractérisé en ce que
quand se produit le désaccouplement d'éléments de fixation (20) voisins, le levier de verrouillage (31) appartenant à l'élément de fixation suivant bascule dans le sens horaire du fait du glissement qui se produit entre la portée d'appui arrière (25) de l'élément de fixation précédent et la partie d'appui avant (62) du bras d'actionnement (33) du levier (31), de sorte que la portée de verrouillage (32) du levier vient par-dessous en prise avec l'ouverture de verrouillage correspondante (85a-c) du rail de guidage (75).

12. Toit de véhicule selon la revendication 11,
caractérisé en ce que
lorsque des éléments de fixation voisins sont désaccouplés, la partie de verrouillage (32) du levier de verrouillage (31) appartenant à l'élément de fixation suivant (20) est maintenue en prise avec l'ouverture de verrouillage (85a-c) par application d'une portée d'appui supérieure (68) formée sur le bras d'actionnement (33) sur la face inférieure (22) de l'élément de fixation précédent.

13. Toit de véhicule selon la revendication 12,
caractérisé en ce que
la partie de verrouillage (32) du levier de verrouillage (31) est proche de l'axe autour duquel s'effectue le mouvement de basculement de l'élément de fixation (20) par rapport au rail de guidage (75), au point que le basculement de l'élément (20) n'entraîne pratiquement aucune élévation de la partie de verrouillage par rapport au rail de guidage.

14. Toit de véhicule selon une des revendications 11 à 13,
caractérisé en ce que
la partie de verrouillage (32) comporte une butée avant d'appui (61) qui s'applique par-dessous sur une contreportée (86) formée dans l'ouverture de verrouillage (85a-c), quand la partie de verrouillage vient en prise dans l'ouverture de verrouillage.

15. Toit de véhicule selon la revendication 14,
caractérisé en ce que
la portée avant d'appui (65) de la partie de verrouillage (32) est inclinée vers l'avant, de sorte que la portée d'appui peut glisser sur la contreportée (85) de l'ouverture de verrouillage (85a-c) afin de libérer le verrouillage solidaire du toit.

16. Toit de véhicule selon une des revendications précédentes,
caractérisé en ce que
quand deux éléments de fixation voisins (20) sont totalement basculés, une portée frontale arrière (51) formée sur l'élément de fixation précédent, est appliquée par l'intermédiaire d'un élément amortisseur (52) sur une portée frontale formée sur l'élément de fixation suivant.

17. Toit de véhicule selon une des revendications précédentes,
caractérisé en ce que
l'élément de fixation (20a-d), à sa partie avant, est relié avec possibilité de basculement à un coulisseau (29) glissant le long de la piste de guidage (74).

18. Toit de véhicule selon une des revendications précédentes,
caractérisé en ce que
des éléments de fixation voisins (20) sont reliés entre eux avec guidage en hauteur, un sabot (40) formé sur un élément de fixation étant en prise dans une fente de coulisse (42) prévue sur le côté dans l'élément de fixation précédent.

19. Toit de véhicule selon la revendication 18,
caractérisé en ce que
des éléments de fixation voisins (20) sont reliés entre eux avec possibilité de déplacement et guidage latéral du fait que le sabot (40) de l'élément de fixation arrière est en prise d'un côté dans la fente de coulisse (42) de l'élément de fixation avant, tandis qu'un contre-support (80) formé sur l'élément de fixation arrière est prévu comme portée d'appui d'opposition.

20. Toit de véhicule selon la revendication 19,
caractérisé en ce que
des éléments voisins de fixation (20), pour effectuer leur mouvement commun dans le sens d'ouverture, peuvent être accouplés par un accouplement activable ou désactivable en fonction d'un mouvement de basculement, cet accouplement étant constitué par un entraîneur (23) situé sur l'élément de fixation avant et par la portée frontale avant (41) de l'élément de fixation arrière, qui sont en prise l'un avec l'autre quand les éléments de couverture (10a-d) constituent une partie de l'assemblage plat mais qui se dégagent l'un de l'autre quand un des éléments de fixation s'est au moins rapproché de sa position totalement basculée.

21. Toit de véhicule selon la revendication 20
caractérisé en ce que
l'entraîneur (23) présente un évidemment (24) à travers lequel peut passer le contre-support (80) de l'élément de fixation voisin.

22. Toit de véhicule selon une des revendications précédentes,
caractérisé en ce que
l'élément de verrouillage (31) associé chaque fois à un élément de fixation (20) peut être actionné directement par un des deux éléments de fixation voisins.

23. Toit de véhicule selon une des revendications précédentes,
caractérisé en ce que
les éléments de couverture sont des lamelles (10a-d).
